(19) Europäisches Patentamt
European Patent Office
Office européen des brevets

(11) **EP 1 217 354 B1**

(12) **FASCICULE DE BREVET EUROPEEN**

(45) Date de publication et mention
de la délivrance du brevet:
**18.05.2011 Bulletin 2011/20**

(51) Int Cl.:
***G01M 15/00*** *(2006.01)* ***G01L 3/00*** *(2006.01)*

(21) Numéro de dépôt: **01403244.5**

(22) Date de dépôt: **14.12.2001**

(54) **Procédé d'évaluation du couple d'un moteur a combustion**

Verfahren zur Auswertung des Drehmomentes eines Brennkraftmotors

Method for evaluating the torque of a combustion engine

(84) Etats contractants désignés:
**BE DE ES IT**

(30) Priorité: **21.12.2000 FR 0016767**

(43) Date de publication de la demande:
**26.06.2002 Bulletin 2002/26**

(73) Titulaire: **Renault s.a.s.**
**92100 Boulogne Billancourt (FR)**

(72) Inventeur: **Renou, Louis**
**75013 Paris (FR)**

(56) Documents cités:
**WO-A-98/29718 US-A- 5 774 823**

**Description**

L'invention concerne un procédé d'évaluation d'un couple gaz d'un moteur thermique à combustion commandée, notamment pour un véhicule automobile. On connaît du brevet FR 2 757 945 un procédé comportant un calculateur recevant un signal alternatif représentatif de la vitesse instantanée d'un vilebrequin dudit moteur, une phase « combustion-détente » d'un cylindre dudit moteur ayant la durée d'un nombre défini T de périodes t dudit signal, ledit calculateur évaluant le couple gaz (Cg) pendant ladite phase par la formule

$$C_g = \alpha.(N.\sum_{t=1}^{t=T} \lambda_t.d_t + \beta).N^2 \qquad (E1)$$

où N est le régime dudit moteur, $\alpha$ est un paramètre d'étalonnage, $\lambda_t$ est un coefficient de pondération, $d_t$ représente la durée de la $t^{ième}$ période dudit signal pendant ladite phase et $\beta$ est une valeur d'apprentissage.

Le couple mesuré est le couple gaz Cg produit par les combustions du mélange air-essence dans les différents cylindres du moteur. Il est utilisé pour optimiser les réglages du moteur, notamment au moyen du calculateur de bord, par exemple pour limiter les ratés de combustion.

Pour émettre un signal alternatif représentatif de la vitesse instantanée du vilebrequin du moteur, on connaît un dispositif du type comprenant une couronne, solidaire du vilebrequin du moteur et dotée de dents sur sa périphérie, et un capteur de défilement connecté au calculateur et mesurant la durée de défilement de chacune des dents de la couronne.

Les dents ont toutes une largeur constante, sauf l'une d'elles, dite dent de repérage, et défilent successivement devant le capteur de défilement. Le signal alternatif produit par ce capteur en réponse au défilement des dents est transmis au calculateur. Le calculateur évalue la durée de défilement des dents devant le capteur de défilement et en déduit des évaluations du régime moteur N et de la vitesse instantanée du vilebrequin.

Un principe, dit du couple-mètre logiciel, énonce que le couple gaz $C_g$ est proportionnel à l'amplitude des variations de la vitesse instantanée du vilebrequin et peut donc être déterminé en fonction de la durée de défilement des dents.

Le calculateur dispose des moyens de calculer le couple gaz en fonction de la durée de défilement des dents, en vertu de ce principe.

La dent de repérage permet au calculateur d'identifier à tout instant les phases dans lesquelles sont les différents cylindres.

Le calculateur calcule ainsi un couple gaz $C_g$ pour chaque phase de combustion-détente de chaque cylindre. Suite à l'évaluation du couple gaz $C_g$ pour la phase de combustion-détente d'un cylindre, le calculateur prend des décisions sur le réglage du moteur.

FR 2 757 945 enseigne un procédé d'évaluation du couple gaz $C_g$ d'un moteur thermique mettant en oeuvre un dispositif du type précité. Différentes formules sont utilisées par le calculateur notamment pour prendre en considération dans le calcul du couple gaz $C_g$ les irrégularités de position ou de forme des dents par rapport au capteur de défilement.

Ces irrégularités résultent par exemple de l'usure du moteur et des dents de la couronne ainsi que des déformations du vilebrequin.

Des valeurs d'apprentissage $\beta$ sont calculées pour prendre en compte ces irrégularités lors du calcul du couple gaz $C_g$.

Les valeurs d'apprentissage $\beta$ permettent également de corriger des déformations du signal alternatif dues au traitement électronique en entrée du calculateur.

Dans une première étape, généralement en sortie de chaîne de montage du véhicule, dite étape d'apprentissage rapide, les valeurs d'apprentissage $\beta$ sont évaluées sur un horizon limité de cycles du moteur réalisés dans des conditions d'apprentissage incluant une absence de combustion dans les cylindres.

Au cours de la vie du véhicule, les valeurs d'apprentissage $\beta$ sont régulièrement affinées lors d'étapes dites d'apprentissage lent réalisées lorsque le régime moteur N appartient à une plage de calibration $P_c$ restreinte et en absence de combustion dans les cylindres. Pour un moteur à quatre temps et à quatre cylindres, l'affinage des valeurs d'apprentissage $\beta$ a lieu à chaque demi-tour de la couronne.

La précision du couple gaz $C_g$ évalué avec le procédé décrit dans FR 2 757 945 s'avère cependant insuffisante pour remplir les conditions imposées par certaines normes comme l'European On-Board Diagnostic (E-OBD) ou l'On-Board Diagnostic II. Le calculateur ne parvient pas toujours en effet à diagnostiquer les ratés de combustion, notamment dans les hauts régimes du moteur, et à régler correctement le système antipollution.

La présente invention a pour but de fournir un procédé d'évaluation du couple gaz $C_g$ d'un moteur thermique plus précise afin notamment de respecter les normes mentionnées ci-dessus quel que soit le régime du moteur.

On atteint ce but en évaluant la valeur d'apprentissage β par interpolation entre deux valeurs d'apprentissage locales $β_q$ et $β_{q+1}$ évaluées dans des plages élémentaires $P_q$ et $P_{q+1}$ de régimes moteur, respectivement, centrées sur des régimes moteur $N_q$ et $N_{q+1}$, respectivement, tels que $N_q < N \le N_{q+1}$.

L'influence du régime moteur sur la déformation du signal alternatif, due par exemple à une déformation du vilebrequin, et sur son traitement électronique en entrée de calculateur, est évaluée localement lors de l'évaluation des valeurs d'apprentissage locales $β_q$.

Les valeurs d'apprentissage locales $β_q$ sont calculées dans différentes plages élémentaires $P_q$ de régimes moteur, et non plus dans une plage unique de calibration $P_c$.

Lorsque le moteur tourne à un régime N au voisinage d'une des plages élémentaires $P_q$ de régimes moteur, la valeur d'apprentissage locale $β_q$ fournit donc une bonne estimation pour la valeur d'apprentissage β.

L'interpolation permet de pondérer l'influence de deux valeurs d'apprentissage locales $β_q$ et $β_{q+1}$ encadrant la valeur d'apprentissage β, en proportion de la proximité du régime moteur N avec les régimes moteur $N_q$ et $N_{q+1}$, respectivement.

L'évaluation de la valeur d'apprentissage β est d'autant meilleure que les plages élémentaires $P_q$ de régimes moteur sont restreintes et proches du régime moteur N.

Le procédé selon l'invention permet donc d'obtenir une évaluation de la valeur d'apprentissage β tenant compte du régime du moteur N, donc plus précise que celle fournie par FR 2 757 945, et donc d'évaluer le couple gaz Cg de manière plus satisfaisante.

Selon d'autres caractéristiques de l'invention, pouvant exister séparément ou en combinaison,

- ledit signal alternatif représentatif de la vitesse instantanée dudit vilebrequin dudit moteur est émis par un capteur de défilement connecté audit calculateur et mesurant la durée de défilement de dents placées à la périphérie d'une couronne solidaire dudit vilebrequin,

- ladite interpolation est linéaire et

$$\beta = \beta_q + (\beta_{q+1} - \beta_q).\frac{(N - N_q)}{(N_{q+1} - N_q)} \qquad (E2),$$

- lesdites plages élémentaires $P_q$ couvrent entièrement une plage $P$ des régimes moteur N possibles,

- lesdites plages élémentaires $P_q$ ne se chevauchent pas,

- lesdites plages $P_q$ et $P_{q+1}$ sont adjacentes,

- lors d'une étape d'apprentissage rapide, ledit régime moteur N appartenant à ladite plage élémentaire $P_q$ de régimes moteur, ledit calculateur évalue ladite valeur d'apprentissage locale $β_q$ par une valeur d'apprentissage locale moyenne $\overline{\beta_q}$ égale à la moyenne arithmétique d'un nombre $P_q$ de valeurs d'apprentissage locales unitaires $β_q(p)$ calculées au moyen de la formule

$$\beta_q(p) = \frac{C_m}{\alpha.N^2} - \sum_{t=1}^{t=T} \lambda_t.d_t \qquad (E3),$$

où p désigne le numéro d'ordre du passage, dans des conditions d'apprentissage, devant ledit capteur de défilement, d'un secteur de ladite couronne portant l'ensemble desdites dents défilant devant ledit capteur de défilement pendant une phase de combustion-détente dudit cylindre, ledit secteur étant appelé « secteur de combustion-détente » dudit cylindre, une portion dudit signal alternatif correspondant audit passage et comportant T périodes,

$C_m$ désigne une évaluation d'un couple moteur pendant le p[ième] dit passage, dans lesdites conditions d'apprentissage, dudit secteur devant ledit capteur de défilement,

$\alpha$ est un paramètre d'étalonnage,

$d_t$ représente la durée de la $t^{\text{ième}}$ période de ladite portion et $\lambda_t$ est un coefficient de pondération,

- lors d'une étape d'apprentissage rapide, ledit régime moteur N appartenant à une plage de calibration $P_c$, ledit calculateur évalue toutes lesdites valeurs d'apprentissage locales $\beta_q$ par une valeur d'apprentissage de calibration moyenne $\overline{\beta_c}$ égale à la moyenne arithmétique d'un nombre $P_c$ de valeurs d'apprentissage de calibration unitaires $\beta_c(p)$ calculées au moyen de la formule

$$\beta_c(p) = \frac{C_m}{\alpha.N^2} - \sum_{t=1}^{t=T} \lambda_t.d_t \qquad (E5),$$

où

p désigne le numéro d'ordre du passage, dans lesdites conditions d'apprentissage, devant ledit capteur de défilement, dudit secteur de combustion-détente, une portion dudit signal alternatif correspondant audit passage et comportant T périodes,

$C_m$. désigne une évaluation dudit couple moteur pendant le $p^{\text{ième}}$ passage, dans lesdites conditions d'apprentissage, dudit secteur devant ledit capteur de défilement,

$\alpha$ est un paramètre d'étalonnage,

$d_t$ représente la durée de la $t^{\text{ième}}$ période de ladite portion et $\lambda_t$ est un coefficient de pondération,

- ledit calculateur évalue ledit couple moteur $C_m$ au moyen de la formule

$$C_m = K.P_{coll} \qquad (E6)$$

$P_{coll}$ désignant une pression dans un collecteur d'admission d'air mesurée par un capteur de pression et transmise audit calculateur,

K désignant un coefficient de proportionnalité,

- ladite plage de calibration $P_c$ est constituée des régimes dudit moteur compris entre 3000 tr/min et 3500 tr/min,

- après achèvement d'une dite étape d'apprentissage rapide, ladite valeur d'apprentissage locale $\beta_q$ est affinée, lors d'au moins une étape d'apprentissage lent commençant avec le $M^{\text{ième}}$ passage p dudit secteur de combustion-détente devant ledit capteur de défilement, dans lesdites conditions d'apprentissage et ledit régime moteur N appartenant à ladite plage élémentaire $P_q$ de régimes moteur, ladite étape d'apprentissage lent durant un nombre m de dits passages p,

par une valeur d'apprentissage locale unitaire affinée $\beta_q(M+m-1)$, chaque valeur d'apprentissage locale unitaire $\beta_q(p)$, p variant de M à M+m-1 étant successivement évaluée par

$$\beta_q(p) = \beta_q(p-1) + g(\beta_q(p) - \beta_q(p-1)) \qquad (E7),$$

ladite valeur d'apprentissage locale unitaire $\beta_q(M-1)$ étant égale à la dernière évaluation de ladite valeur d'apprentissage locale $\beta_q$ connue au début de ladite étape d'apprentissage lent, g étant un coefficient de filtrage.

La présente invention concerne également un dispositif pour la mise en oeuvre du procédé selon l'invention et un véhicule équipé d'un tel dispositif.

D'autres caractéristiques et avantages de la présente invention apparaîtront à la lecture de la description qui va suivre et à l'examen du dessin dans lequel,

- la figure 1 représente un schéma d'un dispositif du type précité pour la mise en oeuvre du procédé selon l'invention,

- la figure 2 représente un organigramme regroupant les différentes étapes du procédé selon l'invention.

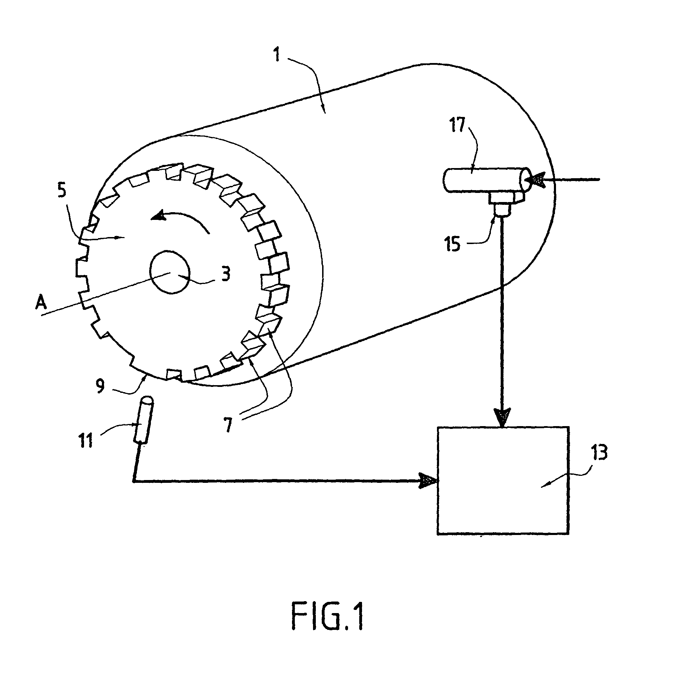

La figure 1 représente un dispositif du type précité. Un moteur 1 comporte un vilebrequin 3 équipé d'une couronne 5, ou cible, portant une pluralité de dents 7 à sa périphérie. Ces dents, sensiblement identiques, sont régulièrement espacées et ont sensiblement la forme d'un créneau entre deux creux. Une dent de repérage 9 se distingue des autres par exemple par une largeur supérieure.

La couronne 5 tourne autour d'un axe A de rotation du vilebrequin 3 à la même vitesse que ce dernier, c'est-à-dire au régime N du moteur 1. Chacune des dents 7 passe successivement devant un capteur de défilement 11, par exemple à réluctance variable, monté fixement par rapport au moteur 1 de manière à percevoir le défilement de chaque dent 7. Le défilement d'une dent 7 puis de l'espace qui la sépare de la dent 7 suivante se traduit par l'émission par le capteur de défilement 11 d'un signal alternatif comportant une bosse puis un creux, les largeurs de cette bosse et de ce creux étant en proportion de la durée du défilement de la dent 7 et de l'espace qui la sépare de la dent suivante, respectivement.

Le signal alternatif est transmis à un calculateur 13 fixé à bord du véhicule, par exemple par un câble connectant le capteur 11 et le calculateur 13.

Le calculateur 13 peut opérer un pré-traitement du signal alternatif qu'il reçoit, par exemple pour l'amplifier ou pour transformer les bosses en créneaux.

Un capteur de pression 15 mesure la pression $P_{coll}$ dans un collecteur d'admission d'air 17 du moteur 1 et transmet, par exemple par câble, cette mesure au calculateur 13.

Dans le cas particulier d'un moteur 1 à essence à quatre cylindres et à quatre temps fonctionnant suivant le cycle de Beau de Rochas, chaque cylindre subit successivement quatre phases : admission, compression, combustion-détente et échappement. Chaque phase dure le temps d'un demi-tour du vilebrequin 3, et donc de la couronne 5.

Quand un cylindre est en phase de combustion-détente, un deuxième est en phase d'échappement, un troisième en phase d'admission et un quatrième en phase de compression.

Un cylindre subit une phase de combustion-détente tous les deux tours du vilebrequin 3. Pendant cette phase, le couple gaz $C_g$ est la résultante du couple dû à cette combustion-détente et de celui, en sens contraire, produit par le cylindre alors en phase de compression. On considère généralement que les deux autres cylindres, en phase d'admission et de détente, ne participent pas à cette résultante.

Les phases de compression étant moins sujettes à des variations que les phases de combustion-détente, on considère que le couple gaz $C_g$ calculé sur un demi-tour de la couronne 5 est relatif au cylindre en phase de combustion-détente et est une estimation du couple moyen sur les deux phases, compression et combustion-détente, du même cylindre emprisonnant le même mélange gazeux.

La dent de repérage 9 sert d'origine d'indexation pour numéroter les autres dents 7. La position angulaire de la couronne 5, mesurée par un comptage du nombre de dents 7 depuis le dernier passage de la dent de repérage 9 devant le capteur de défilement 11, détermine la position de chacun des cylindres. Par exemple, le passage devant le capteur de défilement 11 de la dent numérotée « 15 » peut correspondre au point mort haut du premier cylindre.

A chaque dent de la couronne 5 correspond une période du signal alternatif reçu par le calculateur 13. L'analyse du signal alternatif permet ainsi au calculateur 13 de déterminer à tout instant, les positions de chacun des cylindres.

Sur une période de deux tours de la couronne 5, le signal alternatif peut être scindé en quatre portions correspondant chacune au défilement, pendant la phase de combustion-détente d'un cylindre, de l'ensemble des dents 7 d'un secteur de la couronne 5.

Ce secteur est appelé secteur de combustion-détente du cylindre. Il comporte, quel que soit le cylindre, un nombre T de dents 7 qui, en défilant devant le capteur de défilement 11 génèrent une portion du signal alternatif comportant T périodes t, un nombre $d_t$ représentant la durée de la $t^{ième}$ période.

Pour un cylindre donné d'un moteur à quatre cylindres et à quatre temps, chaque secteur de combustion-détente définit une demi-couronne.

Deux cylindres partagent le même secteur de combustion-détente si la phase d'admission de l'un d'eux est simultanée à la phase de combustion-détente du second.

Les secteurs de combustion-détente seraient différents pour d'autres types de moteur.

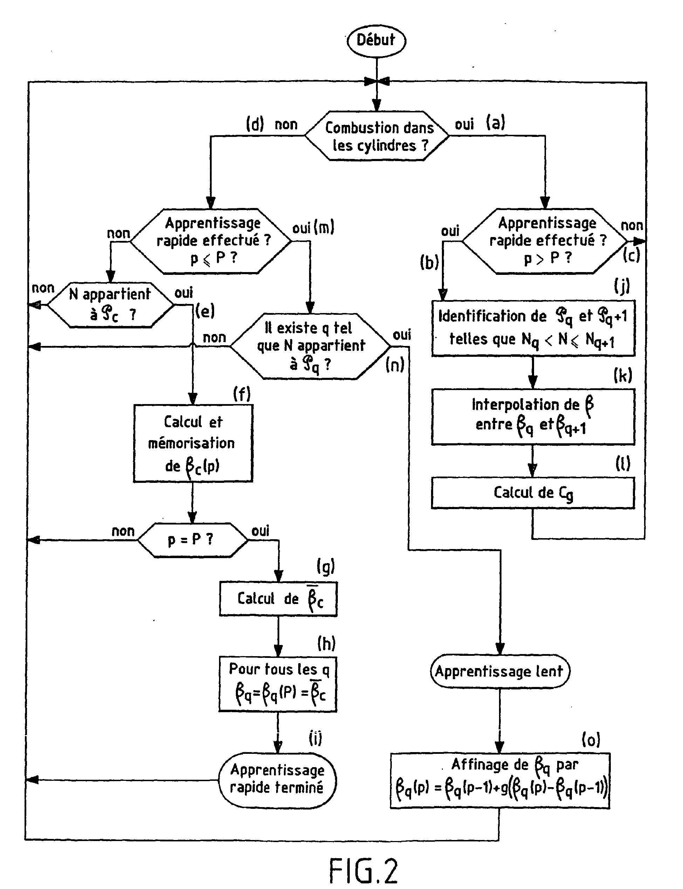

Pour évaluer le couple gaz $C_g$ d'un cylindre, le calculateur procède selon la figure 2. Les lettres entre parenthèses de la figure 2 sont utilisées, également entre parenthèses, dans la description suivante.

L'évaluation du couple gaz $C_g$ ne peut être faite que s'il y a combustion dans les cylindres (a) et si un apprentissage rapide des valeurs d'apprentissage β a été réalisé (b). Sinon (c), aucune évaluation du couple gaz $C_g$ n'est possible.

L'apprentissage rapide est effectué dès la première mise en fonctionnement du calculateur 13, par exemple à la sortie de chaîne du véhicule.

Toute apprentissage d'une valeur d'apprentissage β nécessite des conditions particulières, dites conditions d'apprentissage, et l'appartenance du régime N du moteur 1 à une plage de régimes déterminée.

Les conditions d'apprentissage incluent l'absence de combustion, ou non-combustion, dans tous les cylindres.

Le calculateur 13 reconnaît des conditions de non-combustion, par exemple en détectant une coupure d'injection de carburant dans les cylindres quand le conducteur du véhicule n'exerce plus de pression sur l'accélérateur.

La durée de défilement des dents 7 permet au calculateur 13 d'évaluer le régime du moteur N.

La condition de non-combustion dans les cylindres du moteur 1 est particulièrement importante. Dans ces conditions en effet, des études ont montré une proportionnalité entre un couple moteur $C_m$ et la pression dans le collecteur d'admission d'air 17:

$$C_m = K.P_{coll}. \qquad (E6)$$

On distingue le couple moteur $C_m$ produit par le moteur pendant un demi-tour de la couronne 5 et, dans le procédé selon l'invention, mesuré en absence de combustion dans les cylindres, du couple gaz $C_g$ qui est une estimation, sur les deux phases de compression et de combustion-détente d'un cylindre, du couple moyen produit par la combustion du mélange air-essence dans ce cylindre.

Dans les conditions d'apprentissage, où le couple gaz $C_g$ est nul, le couple moteur, $C_m$ n'est pas nul bien qu'il n'y ait pas de combustion dans les cylindres. Il existe, sous l'effet de la rotation du vilebrequin 3, des effets de pompage et de compression de l'air dans les cylindres.

Informé par le capteur de pression 15 de la pression $P_{coll}$ dans le collecteur d'admission d'air 17, le calculateur 13, ayant connaissance du coefficient de proportionnalité K entre le couple moteur $C_m$ et la pression $P_{coll}$, déduit de la formule

$$C_m = K.P_{coll}. \qquad (E6)$$

une évaluation du couple moteur $C_m$.

L'expérience montre que les couples moteur $C_m$ calculés à partir des pressions mesurées pendant le défilement des dents des secteurs de combustion-détente des différents cylindres sont sensiblement différents les uns des autres.

Il est donc souhaitable d'évaluer une valeur d'apprentissage pour chacun de ces secteurs, soient, pour un moteur à quatre temps et à quatre cylindres, deux valeurs d'apprentissage β et β'.

Selon le mode de réalisation préféré de l'invention, l'apprentissage rapide consiste, en absence de combustion dans les cylindres, (d), et avec un régime moteur N appartenant à une plage de calibration $P_c$ définie, par exemple entre 3000 et 3500 tr/min, (e), à calculer, pour chaque secteur de combustion-détente, une première approximation de la valeur d'apprentissage β.

Les raisonnements concernant β' et β sont analogues. Pour plus de lisibilité, seule l'évaluation de β sera décrite. Le secteur de combustion-détente sera, sauf mention contraire, celui utilisé pour évaluer la valeur d'apprentissage β.

Préalablement à l'étape d'apprentissage rapide, on définit Q plages élémentaires $P_q$ centrées sur des régimes $N_q$ et telles que $N_{q+1} > N_q$. De préférence, les Q plages élémentaires $P_q$ couvrent la plage P des régimes moteur N possibles. De préférence également, les Q plages élémentaires $P_q$ ne se chevauchent pas.

Une valeur d'apprentissage locale $\beta_q$ est affectée à chacune des plages élémentaires $P_q$.

Plus les Q plages élémentaires $P_q$ sont étroites, meilleure est la précision de la valeur d'apprentissage locale $\beta_q$

L'étape d'apprentissage rapide consiste à fournir une première estimation aux valeurs d'apprentissage locales $\beta_q$.

Dans les conditions d'apprentissage et le moteur tournant à un régime moteur N appartenant à une plage de calibration $P_c$, l'ensemble des T dents 7 du secteur de combustion-détente passent régulièrement devant le capteur de défilement 11.

A chacun des passages, numérotés p, du secteur de combustion-détente correspond une portion du signal alternatif émis par le capteur de défilement 11 et reçu par le calculateur 13. Cette portion comporte T périodes t d'une durée $d_t$.

A chaque passage p, une valeur d'apprentissage de calibration unitaire $\beta_c(p)$ est calculée (f) au moyen de la formule

$$\beta_c(p) = \frac{C_m}{\alpha.N^2} - \sum_{t=1}^{t=T} \lambda_t.d_t \qquad (E5),$$

$C_m$ désignant une évaluation du couple moteur pendant le passage p, $\alpha$ étant un paramètre d'étalonnage déterminé

expérimentalement, $\lambda_t$ étant un coefficient de pondération.

Le coefficient de pondération $\lambda_t$ peut être égal à $\cos(t.2.\pi / T)$ .

Les valeurs d'apprentissage de calibration unitaires $\beta_c(p)$ sont enregistrées jusqu'à ce qu'au $P^{ième}$ passage inclus.

Après un nombre P de passages de l'ensemble des dents 7 du secteur devant le capteur de défilement 11, le calculateur 13 effectue (g) la moyenne arithmétique $\overline{\beta}_c$ des P valeurs d'apprentissage de calibration unitaires $\beta_c(p)$.

Chacune des valeurs d'apprentissage locales $\beta_q$ est alors évaluée (h) par cette moyenne arithmétique $\overline{\beta}_c$ .

Les P valeurs d'apprentissage de calibration unitaires $\beta_c(p)$ peuvent être calculées au cours d'une étape d'apprentissage rapide unique ou fractionnée. Ce dernier cas est notamment prévu pour le cas particulier d'un changement de calculateur 13 en cours de vie du véhicule.

Dans un autre mode de réalisation de l'invention, chacune des valeurs d'apprentissage locales $\beta_q$ est évaluée par une valeur d'apprentissage locale moyenne $\overline{\beta}_q$ égale à la moyenne arithmétique d'un nombre $P_q$ de valeurs d'apprentissage locales unitaires $\beta_q(p)$ calculées au moyen de la formule

$$\beta_q(p) = \frac{C_m}{\alpha.N^2} - \sum_{t=1}^{t=T} \lambda_t.d_t \qquad (E3)$$

lors des $P_q$ premiers passages de l'ensemble des dents 7 du secteur de combustion-détente devant le capteur de défilement 11 dans les conditions d'apprentissage et le moteur tournant à un régime moteur N appartenant à la plage élémentaire $P_q$ de régimes moteur.

Le nombre de passages $P_q$ utilisé pour calculer la moyenne arithmétique $\overline{\beta}_q$ peut être le même quel que soit la plage élémentaire $P_q$.

L'apprentissage rapide est alors terminé (i).

Dès que la combustion a repris dans les cylindres (a) et que l'étape d'apprentissage rapide est terminée (b), le calculateur peut évaluer un couple gaz $C_g$ pendant une phase de combustion-détente d'un cylindre.

Dans une première étape (j), le calculateur 13 détermine le régime moteur N et recherche deux plages élémentaires $P_q$ et $P_{q+1}$ telles que $N_q < N \le N_{q+1}$. De préférence, il choisit deux plages élémentaires $P_q$ et $P_{q+1}$ adjacentes.

Le calculateur 13 évalue alors une valeur d'apprentissage $\beta$ par interpolation (k) entre $\beta_q$ et $\beta_{q+1}$, par exemple selon la formule :

$$\beta = \beta_q + (\beta_{q+1} - \beta_q).\frac{(N - N_q)}{(N_{q+1} - N_q)} \qquad (E2)$$

La phase de combustion-détente du cylindre correspond à un passage du secteur de combustion-détente et à une portion du signal alternatif émis par le capteur de défilement 11 et reçu par le calculateur 13. Cette portion comporte T périodes t d'une durée $d_t$.

Après réception de la portion de signal, le calculateur 13 évalue (1) le couple gaz $C_g$ par la formule

$$C_g = \alpha.(N.\sum_{t=1}^{t=T} \lambda_t.d_t + \beta).N^2 \qquad (E1)$$

où $\alpha$ est un paramètre d'étalonnage et $\lambda_t$ est un coefficient de pondération.

Cette valeur du couple gaz $C_g$ est alors disponible pour optimiser le réglage du moteur.

Après que l'apprentissage rapide est achevé, le calculateur affine régulièrement les valeurs d'apprentissage locales $\beta_q$ par des étapes d'apprentissage lent.

Une étape d'apprentissage lent d'une valeur d'apprentissage locale $\beta_q$ nécessite que les conditions d'apprentissage soient remplies, et notamment qu'il n'y ait de combustion dans aucun des cylindres (d), que l'apprentissage rapide soit achevé (m) et que, (n), le régime moteur N appartienne à la plage élémentaire $P_q$.

Une étape d'apprentissage lent commence avec le M<sup>ième</sup> passage p du secteur de combustion-détente devant le capteur de défilement 11 et dure un nombre m de passages p, le temps par exemple d'une décélération du véhicule.

A chaque passage p, dans les conditions décrites ci-dessus, de l'ensemble des dents 7 du secteur de combustion-détente devant le capteur de défilement 11, la valeur d'apprentissage locale $\beta_q$ est évaluée (o) par une valeur d'apprentissage locale unitaire affinée par la formule

$$\beta_q(p) = \beta_q(p-1) + g(\beta_q(p) - \beta_q(p-1)) \qquad (E7)$$

g étant un coefficient de filtrage déterminant la rapidité de la convergence de la série $\beta_q(p)$.

En fin d'étape d'apprentissage lent, la valeur d'apprentissage locale $\beta_q$ est ainsi évaluée par une valeur d'apprentissage locale unitaire affinée $\beta_q(M+m-1)$.

Lors de la première étape d'apprentissage lent, le calcul de la première valeur d'apprentissage locale unitaire affinée, $\beta_q(P+1)$, fait intervenir la valeur d'apprentissage locale unitaire $\beta_q(P)$. Cette dernière est fixée à la dernière valeur d'apprentissage locale $\beta_q$ connue au début de ladite étape d'apprentissage lent, c'est-à-dire, pour la première étape d'apprentissage lent, à la valeur d'apprentissage locale $\beta_q$ déterminée par l'étape d'apprentissage rapide.

La dernière évaluation de la valeur d'apprentissage locale $\beta_q$, évaluée à $\beta_q(M+m-1)$, est utilisable pour le calcul du couple gaz $C_g$ dès que la combustion reprend dans les cylindres, par exemple lors de la phase d'accélération suivante du moteur.

Comme cela apparaît clairement à présent, la présente invention fournit un procédé d'évaluation d'un couple gaz $C_g$ d'un moteur thermique tournant à un régime N au moyen d'une formule utilisant une valeur d'apprentissage $\beta$ particulièrement précise.

La valeur d'apprentissage $\beta$ est en effet déterminée par interpolation entre des valeurs d'apprentissage locales calculées dans des plages élémentaires $P_q$ et $P_{q+1}$ à centrées sur des régimes $N_q$ et $N_{q+1}$, respectivement, proches du régime moteur N et affinées tout au long de la vie du véhicule.

Bien entendu, la présente invention n'est pas limitée au mode de réalisation décrit et représenté, fourni à titre d'exemple illustratif et non limitatif. En particulier, elle est applicable à tout moteur, quel que soit le nombre de cylindres, le secteur de combustion-détente n'étant plus une demi-couronne, mais un secteur de la couronne 5 défilant devant le capteur de défilement 11 pendant la combustion-détente du cylindre.

**Revendications**

1. Procédé d'évaluation d'un couple gaz (Cg) d'un moteur (1) thermique à combustion commandée, notamment pour un véhicule automobile, comportant un calculateur (13) recevant un signal alternatif représentatif de la vitesse instantanée d'un vilebrequin (3) dudit moteur (1), une phase « combustion-détente » d'un cylindre dudit moteur (1) ayant la durée d'un nombre défini (T) de périodes (t) dudit signal, ledit calculateur (13) évaluant le couple gaz (Cg) pendant ladite phase par la formule

$$C_g = \alpha.(N.\sum_{t=1}^{t=T} \lambda_t.d_t + \beta).N^2 \qquad (E1)$$

où N est le régime dudit moteur (1), $\alpha$ est un paramètre d'étalonnage, $\lambda_t$ est un coefficient de pondération, $d_t$ représente la durée de la t<sup>ième</sup> période dudit signal pendant ladite phase et $\beta$ est une valeur d'apprentissage, **<u>caractérisé en ce que</u>** la valeur d'apprentissage $\beta$ est évaluée par interpolation entre deux valeurs d'apprentissage locales $\beta_q$ et $\beta_{q+1}$ évaluées dans des plages élémentaires de régimes moteur $P_q$ et $P_{q+1}$, respectivement et centrées sur des régimes moteur Nq et $N_{q+1}$, respectivement, tels que $N_q < N \le N_{q+1}$.

2. Procédé selon la revendication 1 **<u>caractérisé en ce que</u>** ladite interpolation est linéaire, ladite valeur d'apprentissage $\beta$ étant déterminée par la formule

$$\beta = \beta_q + (\beta_{q+1} - \beta_q).\frac{(N - N_q)}{(N_{q+1} - N_q)} . \qquad (E2)$$

**3.** Procédé selon l'une des revendications 1 ou 2 **caractérisé en ce que** lesdites plages élémentaires $P_q$ couvrent entièrement une plage $P$ des régimes moteur N possibles.

**4.** Procédé selon l'une quelconque des revendications précédentes **caractérisé en ce que** lesdites plages élémentaires $P_q$ ne se chevauchent pas.

**5.** Procédé selon l'une quelconque des revendications précédentes **caractérisé en ce que** lesdites plages $P_q$ et $P_{q+1}$ sont adjacentes.

**6.** Procédé selon l'une quelconque des revendications précédentes **caractérisé en ce que** ledit signal alternatif représentatif de la vitesse instantanée dudit vilebrequin (3) dudit moteur (1) est émis par un capteur de défilement (11) connecté audit calculateur (13) et mesurant la durée de défilement de dents (7) placées à la périphérie d'une couronne (5) solidaire dudit vilebrequin (3).

**7.** Procédé selon la revendication 6, **caractérisé en ce que**, lors d'une étape dite d'apprentissage rapide, ledit régime moteur N appartenant à ladite plage élémentaire $P_q$ de régimes moteur, ledit calculateur (13) évalue ladite valeur d'apprentissage locale $\beta_q$ par une valeur d'apprentissage locale moyenne $\overline{\beta}_q$ égale à la moyenne arithmétique d'un nombre $P_q$ de valeurs d'apprentissage locales unitaires $\beta_q(p)$ calculées au moyen de la formule

$$\beta_q(p) = \frac{C_m}{\alpha.N^2} - \sum_{t=1}^{t=T} \lambda_t.d_t \qquad (E3),$$

où

p désigne le numéro d'ordre du passage, dans des conditions d'apprentissage, devant ledit capteur de défilement (11), d'un secteur de ladite couronne (5) portant l'ensemble desdites dents (7) défilant devant ledit capteur de défilement (11) pendant une phase de combustion-détente dudit cylindre, ledit secteur étant appelé « secteur de combustion-détente » dudit cylindre, une portion dudit signal alternatif correspondant audit passage et comportant T périodes,

$C_m$ désigne une évaluation d'un couple moteur pendant le p$^{ième}$ dit passage, dans lesdites conditions d'apprentissage, dudit secteur devant ledit capteur de défilement (11),

$\alpha$ est un paramètre d'étalonnage,

$d_t$ représente la durée de la t$^{ième}$ période de ladite portion et $\lambda_t$ est un coefficient de pondération.

**8.** Procédé selon la revendication 6 **caractérisé en ce que**, lors d'une étape dite d'apprentissage rapide, ledit régime moteur N appartenant à une plage de calibration $P_c$, ledit calculateur (13) évalue toutes lesdites valeurs d'apprentissage locales $\beta_q$ par une valeur d'apprentissage de calibration moyenne $\overline{\beta}_c$ égale à la moyenne arithmétique d'un nombre $P_c$ de valeurs d'apprentissage de calibration unitaires $\beta_c(p)$ calculées au moyen de la formule

$$\beta_c(p) = \frac{C_m}{\alpha.N^2} - \sum_{t=1}^{t=T} \lambda_t.d_t \qquad (E5),$$

où

p désigne le numéro d'ordre du passage, dans lesdites conditions d'apprentissage, devant ledit capteur de défilement (11), dudit secteur de combustion-détente, une portion dudit signal alternatif correspondant audit passage et comportant T périodes,

$C_m$ désigne une évaluation dudit couple moteur pendant le p$^{iéme}$ passage, dans lesdites conditions d'apprentissage, dudit secteur devant ledit capteur de défilement (11),

$\alpha$ est un paramètre d'étalonnage,

$d_t$ représente la durée de la $t^{ième}$ période de ladite portion et $\lambda_t$ est un coefficient de pondération.

9. Procédé selon l'une quelconque des revendications 7 à 8 **caractérisé en ce que** ledit calculateur (13) évalue ledit couple moteur $C_m$ au moyen de la formule

$$C_m \;=\; K.P_{coll} \qquad\qquad (E6)$$

$P_{coll}$ désignant une pression dans un collecteur d'admission d'air (17) mesurée par un capteur de pression (15) et transmise audit calculateur (13),
K désignant un coefficient de proportionnalité.

10. Procédé selon l'une quelconque des revendications 6 à 9 **caractérisé en ce que** ladite valeur d'apprentissage locale $\beta_q$ est affinée,
lors d'au moins une étape dite d'apprentissage lent commençant avec le $M^{ième}$ passage p dudit secteur de combustion-détente devant ledit capteur de défilement (11), dans lesdites conditions d'apprentissage et ledit régime moteur N appartenant à ladite plage élémentaire $P_q$ de régimes moteur, ladite étape d'apprentissage lent durant un nombre m de dits passages p,
par une valeur d'apprentissage locale unitaire affinée $\beta_q(M+m\text{-}1)$, chaque valeur d'apprentissage locale unitaire $\beta_q(p)$, p variant de M à M+m-1 étant successivement évaluée par

$$\beta_q(p) = \beta_q(p-1) + g(\beta_q(p) - \beta_q(p-1)) \qquad (E7)\,,$$

ladite valeur d'apprentissage locale unitaire $\beta_q(M\text{-}1)$ étant égale à la dernière évaluation de ladite valeur d'apprentissage locale $\beta_q$ connue au début de ladite étape d'apprentissage lent,
g étant un coefficient de filtrage.

11. Procédé selon la revendication 10 et l'une quelconque des revendications 7 à 9 **caractérisé en ce qu'**il comprend une dite étape d'apprentissage rapide et, après achèvement de ladite étape d'apprentissage rapide, au moins une dite étape d'apprentissage lent.

12. Procédé selon la revendication 8 **caractérisé en ce que** ladite plage de calibration $P_c$ est constituée des régimes N dudit moteur compris entre 3000 tr/min et 3500 tr/min,

**Claims**

1. Method for evaluating a gas torque ($C_g$) of a controlled-combustion thermal engine (1), notably for a motor vehicle, comprising a computer (13) receiving an alternating signal representative of the instantaneous speed of a crankshaft (3) of the said engine (1), a "combustion-expansion" phase of a cylinder of the said engine (1) having the duration of a defined number (T) of periods (t) of the said signal, the said computer (13) evaluating the gas torque ($C_g$) during the said phase via the formula

$$C_g = \alpha.(N.\sum_{t=1}^{t=T} \lambda_t.d_t + \beta).N^2 \qquad\qquad (E1)$$

where N is the speed of the said engine (1), $\alpha$ is a calibration parameter, $\lambda_t$ is a weighting coefficient, $d_t$ represents the duration of the $t^{th}$ period of the said signal during the said phase and $\beta$ is a learning value,
**characterized in that** the learning value $\beta$ is evaluated by interpolation between two local learning values $\beta_q$ and $\beta_{q+1}$ evaluated in elementary ranges of engine speeds Pq and $P_{q+1}$ respectively and centred on engine speeds Nq and $N_{q+1}$, respectively, such that $Nq < N \le N_{q+1}$.

2. Method according to Claim 1, **characterized in that** the said interpolation is linear, the said learning value $\beta$ being

determined by the formula

$$\beta = \beta_q + (\beta_{q+1} - \beta_q) \cdot \frac{(N - N_q)}{(N_{q+1} - N_q)} \; . \qquad (E2)$$

3. Method according to one of Claims 1 or 2, **characterized in that** the said elementary ranges Pq completely cover a range P of the possible engine speeds N.

4. Method according to any one of the preceding claims, **characterized in that** the said elementary ranges Pq do not overlap.

5. Method according to any one of the preceding claims, **characterized in that** the said ranges Pq and $P_{q+1}$ are adjacent.

6. Method according to any one of the preceding claims, **characterized in that** the said alternating signal representative of the instantaneous speed of the said crankshaft (3) of the said engine (1) is transmitted by a travel sensor (11) connected to the said computer (13) and measuring the duration of travel of teeth (7) placed on the periphery of a ring gear (5) secured to the said crankshaft (3).

7. Method according to Claim 6, **characterized in that**, during a step called a rapid learning step, the said engine speed N belonging to the said elementary range Pq of engine speeds, the said computer (13) evaluates the said local learning value $\beta_q$ by a mean local learning value $\overline{\beta}_q$ equal to the arithmetic mean of a number Pq of unitary local learning valves $\beta_q(p)$ computed by means of the formula

$$\beta_q(p) = \frac{C_m}{\alpha . N^2} - \sum_{t=1}^{t=T} \lambda_t . d_t \qquad (E3) ,$$

where
p designates the sequence number of the passing, in learning conditions, in front of the said travel sensor (11), of a sector of the said ring gear (5) supporting all of the said teeth (7) travelling in front of the said travel sensor (11) during a combustion-expansion phase of the said cylinder, the said sector being called the "combustion-expansion sector" of the said cylinder, a portion of the said alternating signal corresponding to the said passing and comprising T periods,
$C_m$ designates an evaluation of an engine torque during the pth said passing, in the said learning conditions, of the said sector in front of the said travel sensor (11),
$\alpha$ is a calibration parameter,
$d_t$ represents the duration of the tth period of the said portion and $\lambda_t$ is a weighting coefficient.

8. Method according to Claim 6, **characterized in that**, during a step called rapid learning, the said engine speed N belonging to a calibration range $P_c$, the said computer (13) evaluates all of the said local learning values $\beta_q$ by a mean rating learning value $\beta_c$ equal to the arithmetic mean of a number $P_c$ unitary rating learning values $\beta_c(p)$ computed using the formula

$$\beta_c(p) = \frac{C_m}{\alpha . N^2} - \sum_{t=1}^{t=T} \lambda_t . d_t \qquad (E5) ,$$

where
p designates the sequence number of the passing, in the said learning conditions, in front of the said travel sensor (11), of the said combustion-expansion sector, a portion of the said alternating signal corresponding to the said passing and comprising T periods,
$C_m$ designates an evaluation of the said engine torque during the pth passing, in the said learning conditions, of the said sector in front of the said travel sensor (11),
$\alpha$ is a calibration parameter,
$d_t$ represents the duration of the $t^{th}$ period of the said portion and $\lambda_t$ is a weighting coefficient.

9. Method according to any one of Claims 7 and 8, **characterized in that** the said computer (13) evaluates the said engine torque $C_m$ by means of the formula

$$C_m = K \cdot P_{coll} \qquad (E6)$$

$P_{coll}$ designating a pressure in an air intake manifold (17) measured by a pressure sensor (15) and transmitted to the said computer (13),
K designating a coefficient of proportionality.

10. Method according to any one of Claims 6 to 9, **characterized in that** the said local learning value $\beta_q$ is refined, during at least one step called a slow learning step beginning with the $M^{th}$ passing p of the said combustion-expansion sector in front of the said travel sensor (11), in the said learning conditions and the said engine speed N belonging to the said elementary range Pq of engine speeds, the said slow learning step lasting a number m of said passings p, by a refined unitary local learning value $\beta_q(M+m\text{-}1)$, each unitary local learning value $\beta_q(p)$, p varying from M to M+m-1 being successively evaluated by

$$\beta_q(p) = \beta_q(p-1) + g(\beta_q(p) - \beta_q(p-1)) \qquad (E7),$$

the said unitary local learning value $\beta_q(M\text{-}1)$ being equal to the last evaluation of the said local learning value $\beta_q$ known at the beginning of the said slow learning step,
g being a filtering coefficient.

11. Method according to Claim 10 and any one of Claims 7 to 9, **characterized in that** it comprises a said rapid learning step and, after completion of the said rapid learning step, at least one said slow learning step.

12. Method according to Claim 8, **characterized in that** the said rating range $P_c$ consists of the speeds N of the said engine between 3000 rpm and 3500 rpm.

**Patentansprüche**

1. Verfahren zur Bewertung eines Gasmoments (Cg) eines Verbrennungsmotors (1) mit gesteuerter Verbrennung, insbesondere für ein Kraftfahrzeug, mit einem Rechner (13), der ein Wechselsignal empfängt, das die momentane Geschwindigkeit einer Kurbelwelle (3) des Motors (1) darstellt, wobei eine "Verbrennungs-Expansions"-Phase eines Zylinders des Motors (1) die Dauer einer bestimmten Anzahl (T) von Perioden (t) des Signals besitzt, wobei der Rechner (13) das Gasmoment (Cg) während der Phase durch die Formel

$$C_g = \alpha \cdot (N \cdot \sum_{t=1}^{t=T} \lambda_t \cdot d_t + \beta) \cdot N^2 \qquad (E1)$$

auswertet,
wobei N die Drehzahl des Motors (1) ist, $\alpha$ ein Kalibrierungsparameter ist, $\lambda_t$ ein Gewichtungskoeffizient ist, $d_t$ die Dauer der t-ten Periode des Signals während der Phase darstellt und $\beta$ ein Lernwert ist,
**dadurch gekennzeichnet, dass** der Lernwert $\beta$ durch Interpolation zwischen zwei lokalen Lernwerten $\beta_q$ und $\beta_{q+1}$ bewertet wird, die in elementaren Bereichen von Motordrehzahlen $P_q$ bzw. $P_{q+1}$ bewertet werden und auf Motordrehzahlen $N_q$ bzw. $N_{q+1}$ zentriert sind, wie $N_q < N \leq N_{q+1}$.

2. Verfahren nach Anspruch 1, **dadurch gekennzeichnet, dass** die Interpolation linear ist, wobei der Lernwert $\beta$ durch die Formel

$$\beta = \beta_q + (\beta_{q+1} - \beta_q) \cdot \frac{(N - N_q)}{(N_{q+1} - N_q)} \qquad (E2)$$

bestimmt wird.

3. Verfahren nach einem der Ansprüche 1 oder 2, **dadurch gekennzeichnet, dass** die elementaren Bereiche $P_q$ einen Bereich **P** von möglichen Motordrehzahlen N vollständig abdecken.

4. Verfahren nach einem der vorhergehenden Ansprüche, **dadurch gekennzeichnet, dass** die elementaren Bereiche $P_q$ sich nicht überlappen.

5. Verfahren nach einem der vorhergehenden Ansprüche, **dadurch gekennzeichnet, dass** die Bereiche $P_q$ und $P_{q+1}$ benachbart sind.

6. Verfahren nach einem der vorhergehenden Ansprüche, **dadurch gekennzeichnet, dass** das Wechselsignal, das die momentane Geschwindigkeit der Kurbelwelle (3) des Motors (1) darstellt, von einem Durchlaufsensor (11) ausgesandt wird, der mit dem Rechner (13) verbunden ist und die Dauer des Durchlaufs von Zähnen (7) misst, die am Umfang eines Kranzes (5) angeordnet sind, der mit der Kurbelwelle (3) fest verbunden ist.

7. Verfahren nach Anspruch 6, **dadurch gekennzeichnet, dass** in einem sogenannten schnellen Lernschritt, wobei die Motordrehzahl N zum elementaren Bereich $P_q$ von Motordrehzahlen gehört, der Rechner (13) den lokalen Lernwert $\beta_q$ durch einen mittleren lokalen Lernwert $\overline{\beta}_q$ bewertet, der gleich dem arithmetischen Mittel einer Anzahl Pq von einheitlichen lokalen Lernwerten $\beta_q(p)$ ist, die mittels der Formel

$$\beta_q(p) = \frac{C_m}{\alpha \cdot N^2} - \sum_{t=1}^{t=T} \lambda_t \cdot d_t \qquad (E3)$$

berechnet werden,
wobei p die Ordnungszahl des Durchgangs eines Sektors des Kranzes (5), der die Gesamtheit der Zähne (7) trägt, die vor dem Durchlaufsensor (11) durchlaufen, während einer Verbrennungs-ExpansionsPhase des Zylinders vor dem Durchlaufsensor (11) unter Lernbedingungen bezeichnet, wobei der Sektor "Verbrennungs-Expansions-Sektor" des Zylinders genannt wird, wobei ein Teil des Wechselsignals dem Durchgang entspricht und T Perioden aufweist, $C_m$ eine Bewertung eines Motordrehmoments während d e s p-ten Durchgangs des Sektors vor dem Durchlaufsensor (11) unter den Lernbedingungen bezeichnet,
$\alpha$ ein Kalibrierungsparameter ist,
$d_t$ die Dauer der t-ten Periode des Teils darstellt und $\lambda_t$ ein Gewichtungskoeffizient ist.

8. Verfahren nach Anspruch 6, **dadurch gekennzeichnet, dass** in einem sogenannten schnellen Lernschritt, wobei die Motordrehzahl N zu einem Kalibrierungsbereich $P_c$ gehört, der Rechner (13) alle lokalen Lernwerte $\beta_q$ durch einen mittleren Kalibrierungslernwert $\overline{\beta}_c$ bewertet, der gleich dem arithmetischen Mittel einer Anzahl $P_c$ von einheit-lichen Kalibrierungslernwerten $\beta_c(p)$ ist, die mittels der Formel

$$\beta_c(p) = \frac{C_m}{\alpha \cdot N^2} - \sum_{t=1}^{t=T} \lambda_t \cdot d_t \qquad (E5)$$

berechnet werden,
wobei p die Ordnungszahl des Durchgangs des Verbrennungs-Expansions-Sektors vor dem Durchlaufsensor (11) unter den Lernbedingungen bezeichnet, wobei ein Teil des Wechselsignals dem Durchgang entspricht und T Perioden aufweist,
$C_m$ eine Bewertung des Motordrehmoments während des p-ten Durchgangs des Sektors vor dem Durchlaufsensor (11) unter den Lernbedingungen bezeichnet,
$\alpha$ ein Kalibrierungsparameter ist,
$d_t$ die Dauer der t-ten Periode des Teils darstellt und $\lambda_t$ ein Gewichtungskoeffizient ist.

**9.** Verfahren nach einem der Ansprüche 7 bis 8, **dadurch gekennzeichnet, dass** der Rechner (13) das Motordrehmoment $C_m$ mittels der Formel

$$C_m = K \cdot P_{coll} \qquad (E6)$$

bewertet , wobei $P_{coll}$ einen Druck in einem Lufteinlasskrümmer (17) bezeichnet, der durch einen Drucksensor (15) gemessen wird und zum Rechner (13) übertragen wird, wobei K einen Proportionalitätskoeffizienten bezeichnet.

**10.** Verfahren nach einem der Ansprüche 6 bis 9, **dadurch gekennzeichnet, dass** der lokale Lernwert $\beta_q$ in mindestens einem sogenannten langsamen Lernschritt, der mit dem M-ten Durchgang p des Verbrennungs-Expansions-Sektors vor dem Durchlaufsensor (11) beginnt, unter den Lernbedingungen und bei der Motordrehzahl N, die zum elementaren Bereich $\mathbf{P}_q$ von Motordrehzahlen gehört, wobei der langsame Lernschritt eine Anzahl m von Durchgängen p dauert, durch einen verfeinerten einheitlichen lokalen Lernwert $\beta_q(M+m-1)$ verfeinert wird, wobei jeder einheitliche lokale Lernwert $\beta_q(p)$, wobei p von M bis M+m-1 variiert, nacheinander bewertet wird durch

$$\beta_q(p) = \beta_q(p-1) + g(\beta_q(p) - \beta_q(p-1)) \qquad (E7),$$

wobei der einheitliche lokale Lernwert $\beta_q(M-1)$ gleich der letzten Bewertung des lokalen Lernwerts $\beta_q$ ist, der am Beginn des langsamen Lernschritts bekannt ist,
wobei g ein Filterkoeffizient ist.

**11.** Verfahren nach Anspruch 10 und einem der Ansprüche 7 bis 9, **dadurch gekennzeichnet, dass** es einen sogenannten schnellen Lernschritt und nach der Vollendung des schnellen Lernschritts mindestens einen sogenannten langsamen Lernschritt aufweist.

**12.** Verfahren nach Anspruch 8, **dadurch gekennzeichnet, dass** der Kalibrierungsbereich $\mathbf{P}_c$ aus Drehzahlen N des Motors zwischen 3000 min$^{-1}$ und 3500 min$^{-1}$ besteht.

FIG.1

$$\text{Début}$$

(d) non $\longleftarrow$ Combustion dans les cylindres ? $\longrightarrow$ oui (a)

Apprentissage rapide effectué ? $p \leqslant P$ ?
non $\downarrow$    oui (m)

Apprentissage rapide effectué ? $p > P$ ?
oui (b)    non (c)

non $\longleftarrow$ N appartient à $\mathcal{S}_c$ ? oui (e)

Il existe q tel que N appartient à $\mathcal{S}_q$ ?
non    oui (n)

(j)
Identification de $\mathcal{S}_q$ et $\mathcal{S}_{q+1}$ telles que $N_q < N \leqslant N_{q+1}$

(f)
Calcul et mémorisation de $\beta_c(p)$

(k)
Interpolation de $\beta$ entre $\beta_q$ et $\beta_{q+1}$

(l)
Calcul de $C_g$

non $\longleftarrow$ $p = P$ ? $\longrightarrow$ oui

(g)
Calcul de $\overline{\beta}_c$

(h)
Pour tous les q
$\beta_q = \beta_q(P) = \overline{\beta}_c$

(i)
Apprentissage rapide terminé

Apprentissage lent

(o)
Affinage de $\beta_q$ par
$\beta_q(p) = \beta_q(p-1) + g(\beta_q(p) - \beta_q(p-1))$

FIG.2

EP 1 217 354 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2757945